# DEMANDE DE BREVET EUROPEEN

(11) **EP 1 008 739 A1**
(43) Date de publication de la demande: **14.06.2000**
(21) Numéro de dépôt: 99403013.8
(22) Date de dépôt: 03.12.1999
(51) Int. Cl.: F02D 23/00

(54) **Moteur à combustion interne suralimenté**

(30) Priorité: 11.12.1998 FR 9815658
(71) Demandeur: RENAULT, 92109 Boulogne-Billancourt (FR)
(72) Inventeur: Levard, Frédéric, 92160 Antony (FR)
(74) Mandataire: Fernandez, Francis Lionel

(57) **Abrégé**

L'invention concerne un moteur à combustion interne, du type comportant un compresseur (22) qui est interposé dans une conduite d'admission (10) pour comprimer des gaz d'admission destinés à être fournis au moteur (11), du type dans lequel un papillon d'admission (18) est interposé dans la conduite d'admission (10), en aval du compresseur (22), pour réguler le débit des gaz d'admission, et du type dans lequel le papillon (18) est motorisé et est commandé de manière indirecte par le conducteur du véhicule au moyen d'une pédale d'accélérateur,
caractérisé en ce que, lorsque le conducteur agit sur la pédale d'accélérateur de manière à commander un retour rapide du papillon (18) vers une position d'ouverture minimale (βmin), le papillon motorisé (18) n'est refermé qu'avec un certain retard pour limiter l'augmentation de pression dans le tronçon (32) de conduite d'admission compris entre le compresseur (22) et le papillon (18).

## Description

L'invention concerne un moteur à combustion interne suralimenté.

L'invention se rapporte plus particulièrement à un moteur à combustion interne, du type comportant un compresseur qui est interposé dans une conduite d'admission pour comprimer des gaz d'admission destinés à être fournis au moteur, du type dans lequel un papillon d'admission est interposé dans la conduite d'admission, en aval du compresseur, pour réguler le débit des gaz d'admission, et du type dans lequel le papillon est motorisé et est commandé de manière indirecte par le conducteur du véhicule au moyen d'une pédale d'accélérateur.

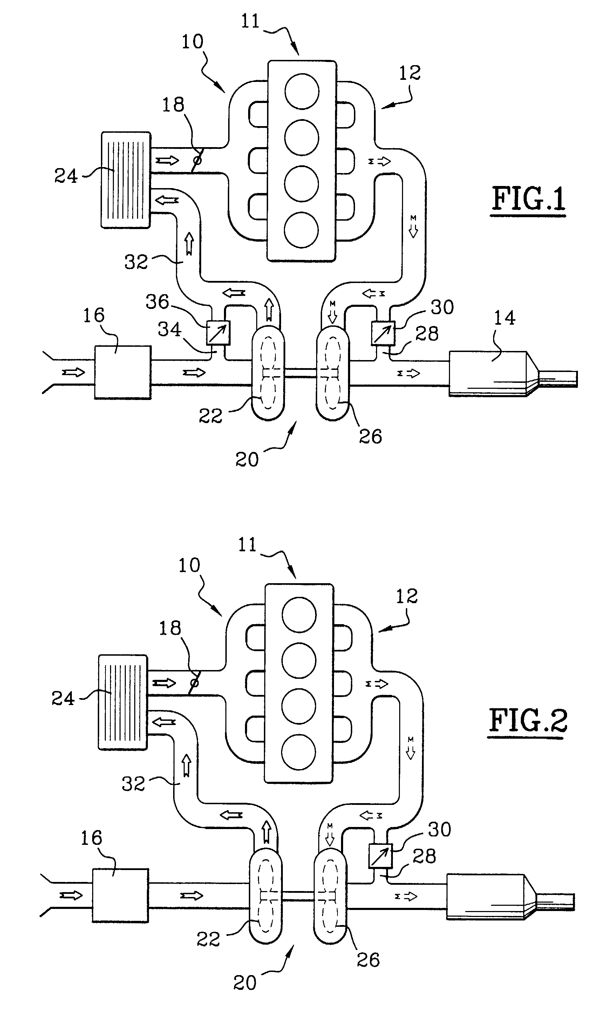

Un tel type de moteur, connu de l'état de la technique, est par exemple représenté sur la figure 1. Pour son fonctionnement, un tel moteur 11 aspire de l'air par l'intermédiaire d'une conduite d'admission 10 et refoule ses gaz d'échappement par une conduite d'échappement 12 afin de diriger les gaz d'échappement vers un système d'échappement 14 comportant par exemple un catalyseur et un silencieux.

Dans la conduite d'admission 10, un filtre à air 16 permet d'éliminer les poussières contenues dans l'air et un papillon d'admission 18, constitué par exemple un volet pivotant, permet de réguler le débit d'air admis dans le moteur 11 en obstruant plus ou moins complètement la conduite d'admission 10.

De façon connue, la position angulaire du papillon d'admission 18, et donc la quantité de débit d'air admise dans le moteur 11, est déterminée en fonction de la volonté d'un conducteur du véhicule, volonté que le conducteur exprime par son action sur un organe de commande tel qu'une pédale d'accélérateur (non représentée).

S'agissant d'un moteur suralimenté, le moteur 11 comporte par ailleurs un turbocompresseur 20 dont le compresseur 22 est interposé dans la conduite d'admission 10 entre le filtre à air 16 et le papillon d'admission 18. Éventuellement, on peut disposer dans la conduite d'admission 10, entre le compresseur 22 et le papillon 18, un échangeur de température 24 qui permet de refroidir l'air comprimé par le compresseur 22.

Bien entendu, le moteur 11 comporte un dispositif d'injection de carburant (non représenté) qui peut être de type indirect, le (ou les) injecteur(s) étant alors agencé(s) dans la conduite d'admission 12, ou de type direct, les injecteurs étant alors agencés au niveau de chacun des cylindres du moteur.

Le compresseur 22 du turbocompresseur 20 est entraîné par la turbine 26 de celui-ci qui est interposée dans la conduite d'échappement 12, entre le moteur 11 et le système d'échappement- 14. De manière connue, la conduite d'échappement 12 est pourvue d'une dérivation 28 qui contourne la turbine 26 et qui est pourvue d'une vanne de dérivation 30, également appelée "waste-gate", pour pouvoir limiter l'énergie apportée par les gaz d'échappement à la turbine 26 et donc pour pouvoir limiter la pression fournie par le compresseur 22.

De manière classique, lorsque le moteur est sollicité à plein régime, la vanne de dérivation 30 est fermée de sorte que l'intégralité des gaz d'échappement transite par la turbine 26 afin que le turbocompresseur fournisse une pression de suralimentation des gaz d'admission particulièrement importante.

A plein régime, le turbocompresseur 20 est donc susceptible de voir son compresseur 22 et sa turbine 26 atteindre des vitesses de rotation de l'ordre de 150 000 à 200 000 tours par minute. Aussi, un turbocompresseur entraîné à une telle vitesse possède une certaine inertie.

Or, on s'est aperçu que l'inertie du turbocompresseur pouvait avoir des conséquences néfastes à sa durée de vie lorsque le conducteur du véhicule effectue ce que l'on appelle un lever de pied, c'est-à-dire lorsque le conducteur relève rapidement le pied de la pédale d'accélérateur, celle-ci rejoignant alors sous l'effet de moyens de rappel élastiques une position de repos pour laquelle le moteur est commandé de manière à fournir un couple minimum, souvent un couple juste nécessaire au maintien de son régime de ralenti.

En effet, dans le cas où le papillon 18 suit fidèlement la position de la pédale d'accélérateur, un tel lever de pied de la part du conducteur provoque une fermeture ou une quasi fermeture rapide du papillon 18, ce qui fait chuter très rapidement le débit d'air dans la conduite d'admission 10, seul subsistant un léger débit nécessaire pour maintenir le régime de ralenti du moteur.

De la sorte, le moteur 11 ne recevant plus qu'un débit minimal d'air, il ne circule plus qu'un débit minimal de gaz d'échappement dans la conduite d'échappement 12 de sorte que la turbine 26 ne fournit plus d'énergie motrice au compresseur 22. Cependant, l'inertie du rotor du turbocompresseur 20 est telle que celui-ci conserve pendant quelques secondes une vitesse de rotation suffisante pour continuer à comprimer l'air d'admission.

Or, le compresseur 22 est alors amené à fournir de l'air sous pression dans le tronçon 32 de la conduite d'admission 10 compris entre le compresseur 22 et le papillon 18. Dans ce tronçon 32, il ne peut circuler qu'un faible débit d'air lorsque le papillon 18 est fermé. Dans ces conditions de fonctionnement, le compresseur 22 peut être amené à un régime d'instabilité susceptible de faire apparaître des vibrations importantes, lesquelles peuvent notamment endommager les paliers de type hydrodynamique sur lesquels le rotor du turbocompresseur 20 est monté tournant.

Pour éviter ce phénomène, il est connu de l'art antérieur illustré à la figure 1 de disposer dans la conduite d'admission 10 une dérivation 34 qui contourne le compresseur 22. La dérivation 34 est pourvue d'une vanne de recirculation commandée 36 qui, lorsqu'une telle situation est détectée, est ouverte de manière à permettre à l'air en surpression contenue dans le tronçon 32 de la conduite d'admission 10 de s'évacuer, quitte à être réinjecté de nouveau en entrée du compresseur 22.

Or, la présence d'une telle vanne de recirculation 36 représente un surcoût non négligeable du fait d'une part de la présence de la vanne 36 mais aussi du fait de l'implantation de prises de pression diverses dans la conduite d'admission qui sont nécessaires pour commander l'ouverture ou la fermeture de cette vanne 36.

L'invention a donc pour objet de proposer un moteur suralimenté dans lequel il est possible de s'affranchir de la présence de la vanne de recirculation, sans pour autant risquer de faire fonctionner le turbocompresseur 20 dans des conditions pouvant amener à sa destruction.

Dans ce but, l'invention propose un moteur du type décrit précédemment, caractérisé en ce que, lorsque le conducteur agit sur la pédale d'accélérateur de manière à commander un retour rapide du papillon vers une position d'ouverture minimale, le papillon motorisé n'est refermé qu'avec un certain retard pour limiter l'augmentation de pression dans le tronçon de conduite d'admission compris entre le compresseur et le papillon.

Selon d'autres caractéristiques de l'invention :
- la fermeture du papillon suit une loi de fermeture en fonction du temps qui est prédéterminée ;
- la loi de fermeture prédéterminée varie en fonction de la valeur de certains paramètres de fonctionnement du moteur ;
- le moteur comporte un capteur de pression qui est agencé dans le tronçon de conduite d'admission compris entre le compresseur et le papillon, et la fermeture du papillon est commandée directement en fonction de la pression mesurée par ledit capteur ;
- le moteur est muni d'un dispositif d'injection de carburant, et, lorsque le conducteur agit sur la pédale d'accélérateur de manière à commander un retour rapide du papillon vers une position d'ouverture minimale, l'injection de carburant est coupée avant que ne débute la fermeture du papillon ; et
- le compresseur fait partie d'un turbocompresseur dont une turbine, interposée dans une conduite d'échappement du moteur, est entraînée en rotation par les gaz d'échappement et entraîne à son tour le compresseur.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique illustrant un moteur turbocompressé réalisé selon l'état de la technique ;
- la figure 2 est une vue similaire à celle de la figure 1 illustrant un moteur conforme aux enseignements de l'invention ; et
- les figures 3 à 7 sont des diagrammes illustrant les variations en fonction du temps, respectivement de la position (αAcc) de la pédale d'accélérateur, de l'injection de carburant (Inj), et de trois lois possibles régissant la position angulaire d'ouverture (βpap) du papillon d'admission en réponse à la variation de la position de la pédale d'accélérateur.

Comme on peut le voir sur la figure 2, le moteur suralimenté 11 selon l'invention ne diffère de celui décrit plus haut que par l'absence de conduite de dérivation et de vanne de recirculation dans la conduite d'admission 10.

Par ailleurs, le moteur 11 selon l'invention est avantageusement pourvu d'un papillon d'admission 18 motorisé, c'est-à-dire un papillon d'admission qui est commandé par un actionneur, par exemple de type électromagnétique, sous l'ordre d'une unité centrale de gestion électronique du moteur, en fonction notamment, mais pas uniquement, de la position de la pédale d'accélérateur.

En effet, selon l'invention, le papillon d'admission 18 est commandé pour réagir avec retard par rapport à un lever de pied de l'utilisateur.

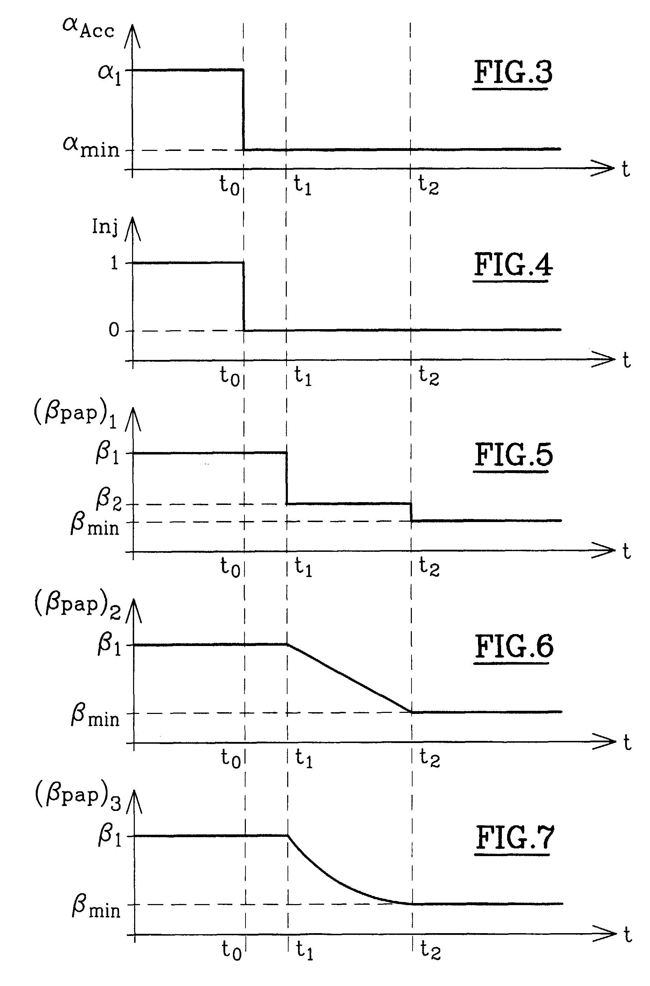

On a ainsi illustré à la figure 3 de manière schématique la position de la pédale d'accélérateur lors d'un tel lever de pied. On suppose alors que la pédale d'accélérateur était initialement maintenue par le conducteur dans une position α1 correspondant à un régime de fonctionnement du moteur pour lequel le turbocompresseur est sollicité.

A l'instant t0, le conducteur relève le pied de l'accélérateur de sorte que celui-ci regagne presqu'immédiatement une position de repos αmin pour laquelle, en régime établi, le moteur est commandé pour ne maintenir que son régime de ralenti.

Le changement de position de la pédale d'accélérateur est ici représenté comme étant instantané. Toutefois, l'invention trouve à s'appliquer non seulement dans un tel cas, mais aussi dans le cas où le changement de position s'étale sur une certaine durée, cette durée étant toutefois suffisamment courte pour que l'on puisse considérer le lever de pied comme étant rapide.

De même, on a représenté le cas où le conducteur lève totalement le pied de la pédale d'accélérateur, mais on peut aussi mettre l'invention en oeuvre dans le cas où le conducteur ne relève son pied que partiellement, à la condition toutefois que la pédale d'accélérateur soit ramenée jusqu'à une position pour laquelle, en régime établi, le papillon d'admission 18 serait commandé pour occuper une position dans laquelle il ne permet le passage que d'un faible débit dans la conduite d'admission 10.

Selon l'invention, dès que le lever de pied du conducteur est détecté par l'unité centrale de gestion électronique du moteur, celle-ci commande une coupure de l'injection de carburant, c'est-à-dire quasiment au même instant t0 que celui auquel se produit le lever de pied ainsi que cela est illustré à la figure 4.

Au contraire, on voit sur les figures 5 à 7 que, selon l'invention, d'une part la fermeture du papillon d'admission 18 n'est pas commencée instantanément, et que d'autre part cette fermeture n'est pas brutale.

On a en effet illustré, sur les figures 5 à 7, trois possibilités alternatives pour la commande selon l'invention de la fermeture du papillon d'admission 18 en réponse au lever de pied du conducteur.

Dans tous les cas, le début de la fermeture du papillon d'admission ne se produit qu'après il se soit écoulé un certain délai à la suite de la coupure de l'injection. Durant ce délai, le papillon conserve sa position initiale β1 correspondant, en régime établi, à la position initiale α1 de la pédale d'accélérateur.

A titre d'exemple, on pourra choisir d'attendre qu'il s'écoule entre deux à cinq, voire dix, cycles de rotation du moteur avant l'instant t1 du début de la fermeture du papillon d'admission 18. Ainsi, au cours de cette phase, plus aucun carburant n'est injecté dans le moteur 11 mais celui-ci continue à aspirer de l'air. Cette phase permet notamment d'aspirer et de brûler une partie du carburant qui aurait pu se déposer sur les diverses parois du moteur 11.

Au-delà de cet instant t1, la fermeture du papillon d'admission 18 est commandée. Dans l'exemple de réalisation de la figure 5, la commande est particulièrement simple, puisque le papillon d'admission effectue un palier à une valeur d'ouverture β2, inférieure à la valeur β1, mais supérieure à la valeur d'ouverture minimale βmin du papillon, et ce jusqu'à un instant t2 auquel il est amené à sa position βmin.

Dans le cas de la figure 6, le papillon 18 est refermé progressivement suivant une loi de variation linéaire en fonction du temps entre les instants t1 et t2.

Dans le cas de la figure 7, le papillon d'admission 18 est refermé en suivant une courbe de type exponentielle décroissante.

Dans tous les cas, la fermeture effective du papillon d'admission, ou plus précisément, l'arrivée du papillon à la position finale correspondant, en régime établi, à la position finale de la pédale d'accélérateur, ne s'effectue qu'à l'instant t2 postérieur à l'instant t1.

Selon l'invention, le délai entre les instants t1 et t2 doit être suffisant pour permettre une décroissance suffisante du régime de rotation du compresseur 22, et donc une décroissance suffisante de la pression qu'il délivre. Toutefois, il est préférable d'éviter que ce délai ne soit trop long, notamment dans le cas où un système d'assistance de freinage par dépression utilise la dépression dans le collecteur d'admission. Dans ce cas, on préférera limiter la durée de la phase de fermeture du papillon d'admission 18 à environ une seconde.

Dans tous les cas, la loi de fermeture du papillon d'admission 18 est telle qu'elle permet de laisser subsister dans la conduite d'admission 10, en aval du compresseur 22, un débit suffisant pour que celui-ci n'entre pas dans une zone de fonctionnement critique dans laquelle il délivre une pression trop importante par rapport au débit.

Dans les trois exemples illustrés sur les figures, le papillon d'admission 18 est donc commandé pour suivre une loi de fermeture prédéterminée, cette loi pouvant être éventuellement modifiée en fonction de la valeur de certains des paramètres de fonctionnement du moteur 11.

Toutefois, dans une variante de réalisation de l'invention, on pourra prévoir d'implanter un capteur de pression dans le tronçon 32 de la conduite d'admission qui se situe entre le compresseur 22 et le papillon d'admission 18, auquel cas on commandera directement la fermeture du papillon 18 en fonction de la pression régnant dans le tronçon 32, en veillant à ce que celle-ci ne s'élève pas de manière trop importante.

Ainsi, grâce à l'invention, il est possible de réaliser un moteur suralimenté 11 comportant moins de composants, donc moins cher et plus fiable, tout en garantissant une sécurité de fonctionnement optimale pour le compresseur 22.

## Revendications

1. Moteur à combustion interne, du type comportant un compresseur (22) qui est interposé dans une conduite d'admission (10) pour comprimer des gaz d'admission destinés à être fournis au moteur (11), du type dans lequel un papillon d'admission (18) est interposé dans la conduite d'admission (10), en aval du compresseur (22), pour réguler le débit des gaz d'admission, et du type dans lequel le papillon (18) est motorisé et est commandé de manière indirecte par le conducteur du véhicule au moyen d'une pédale d'accélérateur,
caractérisé en ce que, lorsque le conducteur agit sur la pédale d'accélérateur de manière à commander un retour rapide du papillon (18) vers une position d'ouverture minimale (βmin), le papillon motorisé (18) n'est refermé qu'avec un certain retard pour limiter l'augmentation de pression dans le tronçon (32) de conduite d'admission compris entre le compresseur (22) et le papillon (18).

2. Moteur selon la revendication 1, caractérisé en ce que la fermeture du papillon (18) suit une loi de fermeture en fonction du temps qui est prédéterminée.

3. Moteur selon la revendication 2, caractérisé en ce que la loi de fermeture prédéterminée varie en fonction de la valeur de certains paramètres de fonctionnement du moteur (11).

4. Moteur selon la revendication 1, caractérisé en ce qu'il comporte un capteur de pression qui est agencé dans le tronçon (32) de conduite d'admission compris entre le compresseur (22) et le papillon (18), et en ce que la fermeture du papillon (18) est commandée directement en fonction de la pression mesurée par ledit capteur.

5. Moteur selon l'une quelconque des revendications précédentes, caractérisé en ce qu'il est muni d'un dispositif d'injection de carburant, et en ce que, lorsque le conducteur agit sur la pédale d'accélérateur de manière à commander un retour rapide du papillon vers une position d'ouverture minimale, l'injection de carburant est coupée avant que ne débute la fermeture du papillon (18).

6. Moteur selon l'une quelconque des revendications précédentes, caractérisé en ce que le compresseur (22) fait partie d'un turbocompresseur (20) dont une turbine (26), interposée dans une conduite d'échappement (12) du moteur (11), est entraînée en rotation par les gaz d'échappement et entraîne à son tour le compresseur (22).
